# EUROPEAN PATENT APPLICATION

(11) **EP 2 631 755 A1**
(43) Date of publication of application: **28.08.2013**
(21) Application number: 12156973.5
(22) Date of filing: 24.02.2012
(51) Int. Cl.: G06F 3/048

(54) **Electronic device including touch-sensitive display and method of controlling same**

(71) Applicant: Research In Motion Limited, Waterloo, ON N2L 3W8 (CA); Research in Motion TAT AB, 21140 Malmö (SE)
(72) Inventor: Andersson Reimer, Nils Roger, 211 40 Malmo (SE); Thorsander, Simon Martin, 211 40 Malmo (SE); Maltesson, Karl, 211 40 Malmo (SE)
(74) Representative: Fennell, Gareth Charles

(57) **Abstract**

A method includes displaying, on a touch-sensitive display of an electronic device, a first set of selection items in a navigational tool bar and a first arrangement of information associated with a first level of an application, in response to detection of an input to display information associated with a second level of the application when the electronic device is in the first level, displaying a second set of selection items in the navigational tool bar and information associated with the second level, wherein the second set of selection items includes a first back navigation item, and in response to detecting selection of the first back navigation item, navigating from the second level of the application to the first level of the application.

## Description

### FIELD OF TECHNOLOGY

The present disclosure relates to electronic devices including but not limited to portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth^{®} capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed. Improvements in electronic devices with touch-sensitive displays are desirable.

### SUMMARY

A method includes displaying, on a touch-sensitive display of an electronic device, a first set of selection items in a navigational tool bar and a first arrangement of information associated with a first level of an application, in response to detection of an input to display information associated with a second level of the application when the electronic device is in the first level, displaying a second set of selection items in the navigational tool bar and information associated with the second level, wherein the second set of selection items includes a first back navigation item, and in response to detecting selection of the first back navigation item, navigating from the second level of the application to the first level of the application.

An electronic device includes a touch-sensitive display and at least one processor coupled to the touch-sensitive display and configured to display, on the touch-sensitive display, a first set of selection items in a navigational tool bar and a first arrangement of information associated with a first level of an application, in response to detection of an input to display information associated with a second level of the application when the electronic device is in the first level, display a second set of selection items in the navigational tool bar and information associated with the second level, wherein the second set of selection items includes a first back navigation item, and in response to detecting selection of the first back navigation item, navigate from the second level of the application to the first level of the application.

### BRIEF DESCRIPTION OF THE DRAWINGS

FIG. 1 is a block diagram of an electronic device such as a portable electronic device in accordance with the disclosure.

FIG. 2 is a front view of a portable electronic device in accordance with the disclosure.

FIG. 3 is a flowchart illustrating a method of controlling display of information in accordance with the disclosure.

FIG. 4 through FIG. 8 illustrate an example of navigating through information associated with an application on an electronic device in accordance with the disclosure.

FIG. 9 through FIG. 12 illustrate another example of navigating through information associated with an application on an electronic device in accordance with the disclosure.

FIG. 13 and FIG. 14 illustrate an example of a navigational toolbar and selectable items utilized to navigate through information.

### DETAILED DESCRIPTION

The following describes an electronic device and method including displaying, on a touch-sensitive display of an electronic device, a first set of selection items in a navigational tool bar and a first arrangement of information associated with a first level of an application, in response to detection of an input to display information associated with a second level of the application when the electronic device is in the first level, displaying a second set of selection items in the navigational tool bar and information associated with the second level, wherein the second set of selection items includes a first back navigation item, and in response to detecting selection of the first back navigation item, navigating from the second level of the application to the first level of the application.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may also be a portable electronic device without wireless communication capabilities, such as a handheld electronic game device, digital photograph album, digital camera, media player, e-book reader, and so forth.

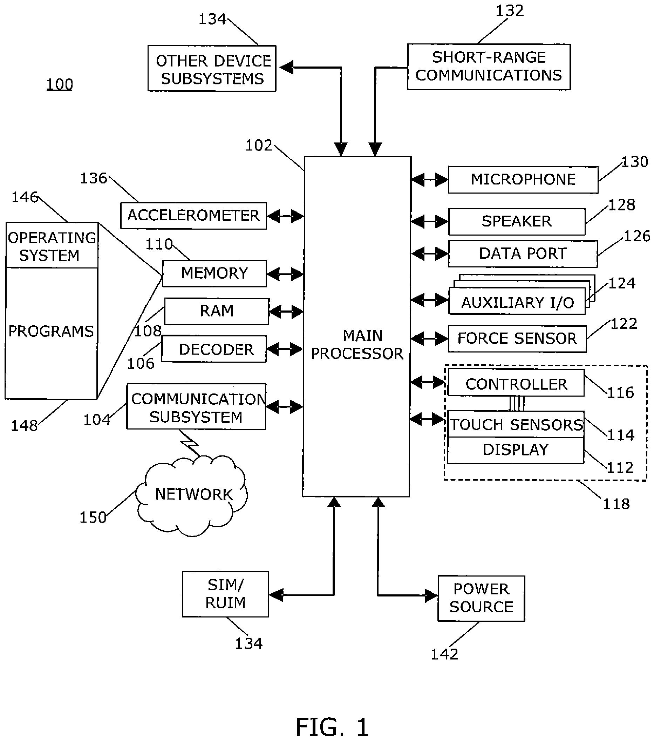

A block diagram of an example of a portable electronic device 100 is shown in FIG. 1. The electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. Optionally, the processor may interact with one or more force sensors 122. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118, A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

Optional force sensors 122 may be disposed in conjunction with the touch-sensitive display 118 to determine or react to forces applied to the touch-sensitive display 118. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information associated with a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

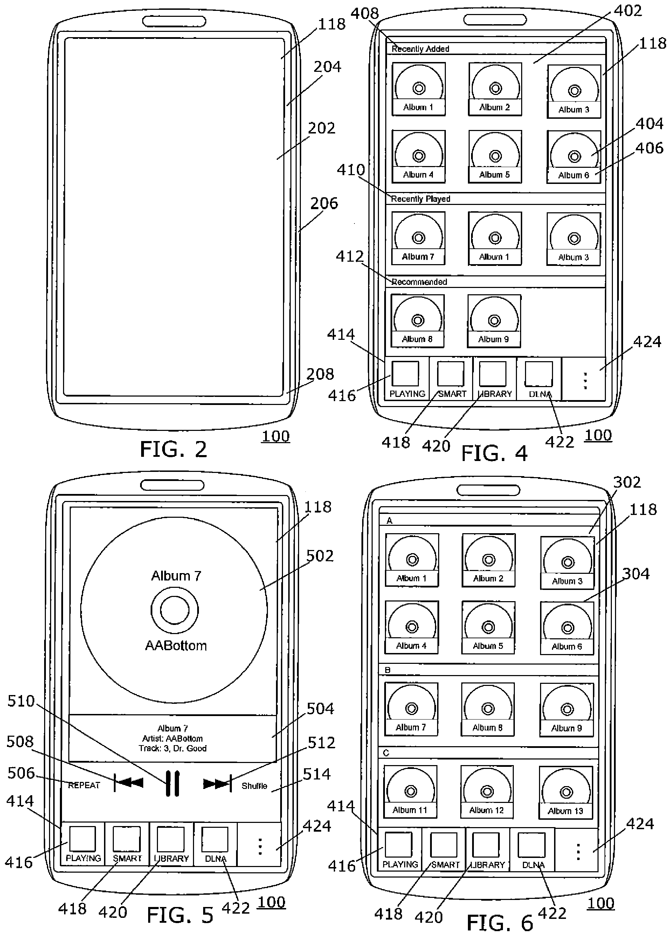

A front view of a portable electronic device is shown in FIG. 2. The touch-sensitive display 118 includes a display area 202 in which information may be displayed, and a non-display area 204 extending around the periphery of the display area 202. The display area 202 generally corresponds to the area of the display 112. Information is not displayed in the non-display area 204 by the display 112, which non-display area 204 is utilized to accommodate, for example, electronic traces or electrical connections, adhesives or other sealants, and/or protective coatings around the edges of the display area. The non-display area 204 may be referred to as an inactive area. The non-display area 204 is typically not part of the physical housing or frame 206 of the electronic device. Typically, no pixels of the display 112 are in the non-display area 204, thus no image can be displayed by the display 112 in the non-display area 204. Optionally, a secondary display, not part of the primary display 112, may be disposed under the non-display area 204. Touch sensors may be disposed in the non-display area 204, which touch sensors may be extended from the touch sensors in the display area or distinct or separate touch sensors from the touch sensors in the display area 202. A touch, including a gesture, may be associated with the display area 202, the non-display area 204, or both areas. The touch sensors may extend across substantially the entire non-display area 204 or may be disposed in only part of the non-display area 204. Touches may be detected, for example, starting in the non-display area 204 and continuing into the display area 202 or starting in the display area 202 and continuing into the non-display area 204, whether or not touch sensors are disposed in the non-display area 204. The portable electronic device 100 optionally includes a set of convenience keys or buttons that may be separate physical keys or buttons or virtual keys or buttons.

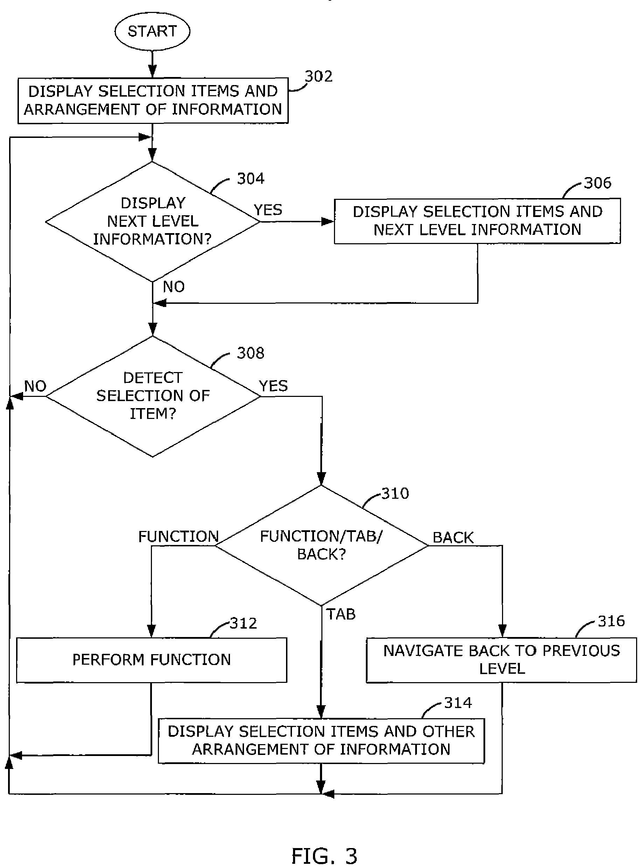

A flowchart illustrating an example of a method of controlling an electronic device, such as the electronic device 100, is shown in FIG. 3. The method may be carried out by software executed by, for example, the processor 102 and/or the controller 116. Coding of software for carrying out such a method is within the scope of a person of ordinary skill in the art given the present description. The method may contain additional or fewer processes than shown and/or described, and may be performed in a different order. Computer-readable code executable by at least one controller or processor of the portable electronic device to perform the method may be stored in a computer-readable medium, such as a non-transitory computer-readable medium.

Selection items and an arrangement of information associated with a first level of an application are displayed 302. The application may be any suitable application, such as a music player application, a video player application, a picture viewer application, and so forth. The selection items are selectable items in a toolbar on the touch-sensitive display 118. The selection items may include selectable tabs. The selection items may also include selectable functions.

The information displayed includes selectable features associated with a first level of the application. The selectable features may identify, for example, music, videos, pictures, and so forth stored on or accessible by the electronic device 100. The selectable features may be selected when, for example, an input such as a touch or tap on an area associated with one of the selectable features is detected.

In response to detecting selection of one of the selectable features at 304, another set of selection items is displayed in the navigational toolbar and information associated with another level of the application is displayed 306. The information associated with the other level is information that is associated with a subset of the information associated with the first level. The navigational toolbar includes a back navigation function in this level. The back navigation function is displayed when information associated with a second or third level is displayed. The back navigation function is not displayed when information associated with the first level is displayed on the touch-sensitive display 118 because no previous level exists to which to navigate back.

When one of the items in the navigational toolbar is selected 308, the nature or characteristic of the item is determined. When the item is a function at 310, the function is performed 312. The function may include any suitable function such as a shortcut to view another screen or a function to be performed on or in relation to the displayed information. When the item is a tab at 310, another arrangement of information, including selectable features, associated with the first level of the application is displayed 314. When the item is the back navigation function, which back navigation function is displayed when information associated with a second or third level of the application is displayed, the electronic device 100 navigates back to a previous level of the application by displaying the information in the previous level. For example, when the back navigation function is selected from a second level of the application, the electronic device 100 navigates back to the previously displayed arrangement of information associated with the first level. When the back navigation function is selected from a third level of the application, the electronic device 100 navigates back to the previo,usly displayed information associated with the second level. The back navigation function may include an indication to identify the previously displayed information or arrangement of information to which the electronic device 100 navigates when the back navigation function is selected.

An example of navigating through information associated with an application is illustrated in FIG. 4 through FIG. 8. The electronic device 100 is in a portrait orientation in the examples, although the information may be displayed in a landscape orientation as well. In this example, information associated with a music player application is displayed when the music player is launched or executed.

When the music player is launched, an arrangement of information associated with a first level of the music player application is displayed on the touch-sensitive display 118. In the example illustrated in FIG. 4, the information displayed is a collection of music 402, and the information is arranged in a smart arrangement by music album. A smart arrangement includes arrangements of information showing, for example, recently played, recently added items, suggested items, or items having other identified qualities. Suggested items may include items with information in common with recently play or recently added items, for example. The collection of music may include music stored locally on the electronic device 100 or music stored remotely and accessible by the electronic device 100. The album may be identified by album artwork displayed in an album icon 404 and/or by title 406. In this example, the music is arranged in a smart arrangement of groups of albums, including a group of recently added albums 408, a group of recently played albums 410, and a group of recommended albums 412. The group of recommended albums 412 may include albums recommended based on the group of recently added albums 408 and the group of recently played albums 410.

Each of the album icons 404 is selectable. An album icon 404 is selected in response to detecting an input, such as a touch or tap, to display information associated with a second level of the music application. Thus, one of the album icons is selected when a touch or a tap is detected at a location associated with the album icon 404 on the touch-sensitive display 118.

A navigational toolbar 414 is also displayed along with the arrangement of information on the touch-sensitive display 118. A first set of selection items is displayed in the navigational tool bar 414. The first set of selection items includes a "PLAYING" function 416 and a plurality of tabs. The "PLAYING" function 416 is a shortcut associated with music playing on the electronic device 100. The tabs include a "SMART" tab 418, a "LIBRARY" tab 420, and a "DLNA" tab 422. The "SMART" tab 418, the "LIBRARY" tab 420, and the "DLNA" tab 422 are selectable tabs. In response to detecting selection of one of the "SMART" tab 418, the "LIBRARY" tab 420, and the "DLNA" tab 422, the collection of music 402 is displayed in another arrangement. The "SMART" tab 418 is associated with the smart arrangement of groups illustrated in FIG. 4. The "LIBRARY" tab 420 is associated with an alphabetically ordered listing of the collection of music, for example, by album. The "DLNA" tab 422 is associated with a list of music available for playing on the electronic device 100, including music stored remotely, for example, at another electronic device in communication with the electronic device 100. The music may be ordered in any suitable order and may be arranged, for example, by album.

In addition to the tabs 418, 420, 422, a more options item 424 is displayed in the navigational toolbar 414. In response to selection of the more options item 424, additional selection items are displayed. The additional selection options may include, for example, selectable items such as a select item, an edit item, and so forth.

In the example described, the collection of music is arranged based on album. The collection of music may also be arranged based on artist, playlist, genre, and so forth. The basis of arrangement may be selected, for example, by selection of an option displayed on the touch-sensitive display 118.

When music is playing on the electronic device 100, information associated with the music playing on the electronic device 100 is displayed on the touch-sensitive display 118 in response to detecting selection of the "PLAYING" function 416. An example of the information associated with the music is shown in FIG. 5. In this example, the information associated with the music includes album cover artwork 502, and an information bar 504 including the album name, the artist name, the song, also referred to as track number, and the song name. Additional information such as time of play of album, time remaining in the album, time remaining in the song, and any other suitable information may be displayed.

In addition to the information, selectable music player controls are displayed on the touch-sensitive display 118. The music player controls include, a repeat control 506 to repeat the song or album, a rewind control 508 to go to the beginning of the song, a pause control 510 to pause playing, a forward control 512 to skip to the next song, and a shuffle control 514 to shuffle the songs of the album.

The navigational toolbar 414 is also displayed along with the information associated with the music. In this example, the navigational toolbar includes the first set of selection items, including the "PLAYING" function 416, the "SMART" tab 418, the °`LIBRARY" tab 420, the "DLNA" tab 422, and the more options item 424.

In response to selection of the "LIBRARY" tab 420, the collection of music 402 is displayed in an alphabetically ordered arrangement. The alphabetically ordered arrangement is based on album name in the example of FIG. 6. Each of the album icons 404 is selectable to display information associated with a second level of the music application.

The navigational toolbar 414 is also displayed along with the information associated with the music. The navigational toolbar includes the first set of selection items, including the "PLAYING" function 416, the "SMART" tab 418, the "LIBRARY" tab 420, the "DLNA" tab 422, and the more options item 424.

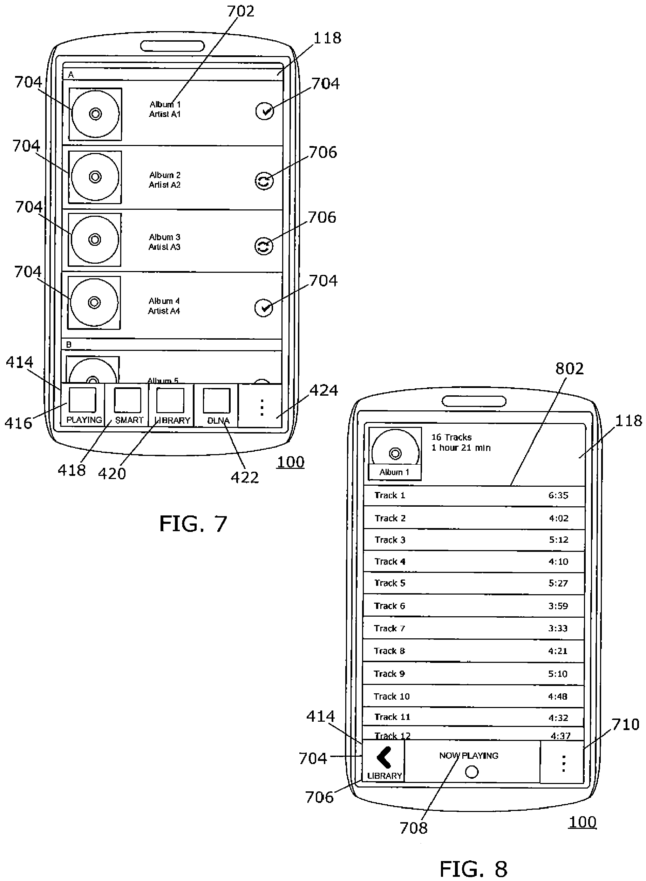

In response to selection of the "DLNA" tab 422, a list of music available for playing on the electronic device 100, including music stored remotely, is displayed on the touch-sensitive display 118. The list of music is an alphabetically ordered list based on album name in the example illustrated in FIG. 7. In this example, the list includes the album icons 404, the associated album names and artists names 702, and an indication of the location at which the information is stored. The indication may be a device indicator 704, identifying the album as being stored on the electronic device 100, or a network album indicator 706, identifying the album as being stored remotely and accessible for playing by the electronic device 100.

In each of the smart arrangement illustrated in FIG. 4, the library arrangement illustrated in FIG. 6, and the DLNA (Digital Living Network Alliance) arrangement illustrated in FIG. 7, the album icons 404 are selectable by, for example, a touch or tap on at an area associated with the album icon. In response to detecting selection of one of the album icons 404, a selectable list of the songs 802 associated with the album is displayed, as illustrated in the example of FIG. 8. Thus, further information is displayed. The further information is associated with a subset of the information associated with the first level. In this example, the list of songs 802 includes the song title and the playing time of the song. The list may include other information.

Each of the songs is selectable by touching or tapping on the area of the touch-sensitive display 118 that is associated with the song. In response to detecting selection of one of the songs, the selected song is added to a play list for playing on the electronic device 100.

In addition to the list of songs, the navigational toolbar 414 is displayed. The navigational toolbar 414 in the second level differs from the navigational toolbar 414 in the first level. In this example, the navigational tool bar 414 includes a second set of selection items. The list of songs and the second set of selection items in the navigational toolbar 414 may replace the previously displayed information associated with the first level and the first set of selection items in any suitable manner. For example, the information and the second set of selection items may transition in by sliding onto the display from the left side to replace the previously displayed information and the first set of selection items.

The second set of selection items includes a back navigation item 804 to navigate back to the previously displayed level. For example, when the list of songs is displayed in response to selecting an album icon 404 from the library arrangement, the electronic device 100 navigates back to the library arrangement in response to detecting selection of the back navigation item 804. When the list of songs is displayed in response to selecting an album icon 404 from the smart arrangement, the electronic device 100 navigates back to the smart arrangement in response to detecting selection of the back navigation item 804. When the list of songs is displayed in response to selecting an album icon 404 from the DLNA arrangement, the electronic device 100 navigates back to the DLNA arrangement in response to detecting selection of the back navigation item 804. The back navigation item 804 includes an identification 806 of the arrangement that the electronic device 100 navigates back to in response to selection of the back navigation item 804.

The navigational toolbar 414 includes other selectable items including a "PLAYING" function 808 that is associated with music playing on the electronic device 100. When music is playing on the electronic device 100, information associated with the music playing on the electronic device 100 is displayed on the touch-sensitive display 118 in response to detecting selection of the "PLAYING" function 808.

A more options item 810 is also displayed in the navigational toolbar 414. In response to selection of the more options item 810, additional selectable items are displayed. The additional selection options may include, for example, selectable items such as a select item, an edit item, and so forth.

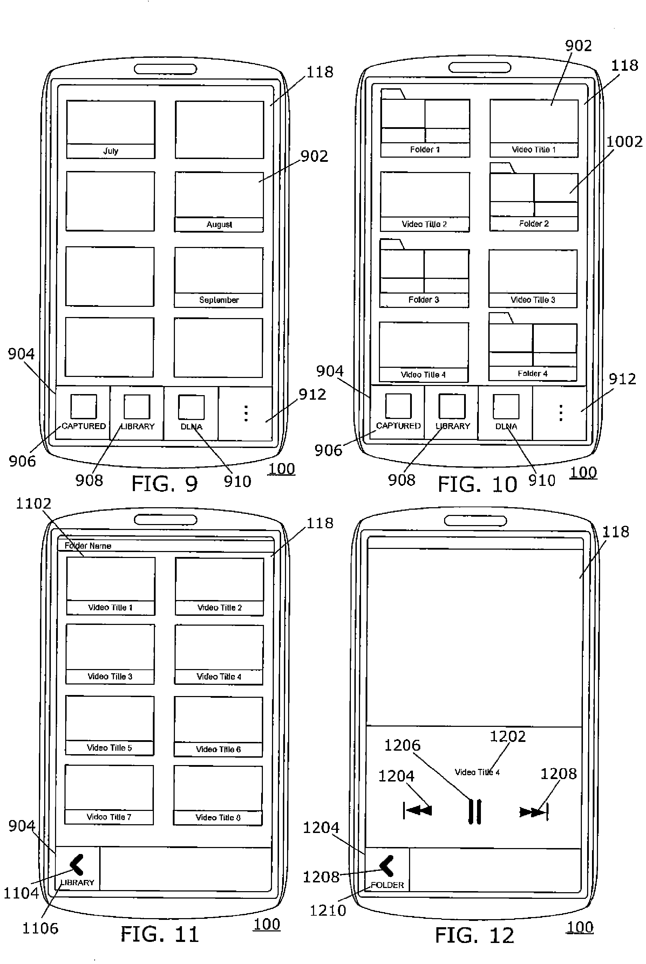

Another example of navigating through information associated with an application is illustrated in FIG. 9 through FIG. 12. In this example, information associated with a video player application is displayed when the video player is launched or executed.

When the video player is launched, an arrangement of information associated with a first level of the video player application is displayed on the touch-sensitive display 118. In the example illustrated in FIG. 9, the information displayed is a collection of videos 902, and the information is arranged based on the date that the video was captured utilizing the electronic device 100. The collection of videos includes videos stored locally on the electronic device 100. The collection of videos may also include videos stored remotely and accessible by the electronic device. The videos may be identified by date or by a still image of the video.

Each of the videos 902 is selectable. A video 902 is selected in response to detecting an input, such as a touch or tap, to display information associated with another level of the video application.

A navigational toolbar 904 is also displayed along with the arrangement of information on the touch-sensitive display 118. A first set of selection items is displayed in the navigational tool bar 904. The first set of selection items include a plurality of selectable tabs that include a "CAPTURED" tab 906, a "LIBRARY" tab 908, and a "DLNA" tab 910. In response to detecting selection of one of the "LIBRARY" tab 908, and the "DLNA" tab 910, the collection of videos 902 is displayed in another arrangement. The "CAPTURED" tab is associated with the arrangement of videos illustrated in FIG. 9. The "LIBRARY" tab 908 is associated with an alphabetically ordered arrangement of the collection of videos based on title or folder title. The "DLNA" tab 910 is associated with an arrangement of videos available for playing on the electronic device 100, including music stored remotely, for example, at another electronic device in communication with the electronic device 3.00.

A more options item 912 is also displayed in the navigational toolbar 904. In response to selection of the more options item 912, additional selectable items are displayed.

In response to detecting selection of the "LIBRARY" tab 908, the collection of videos is displayed in an alphabetically ordered arrangement based on video name or folder name for videos that are arranged in folders 1002, as illustrated in FIG. 10.

The navigational toolbar 904 is also displayed along with the information associated with the videos. The navigational toolbar includes the first set of selection items, including the "CAPTURED" tab 906, the "LIBRARY" tab 908, the "DLNA" tab 910, and the more options item 912.

Each of the videos 902 is selectable to display information associated with another level of the video application. Each of the folders 1002 is also selectable to display information associated with another level of the video application. The electronic device 100 navigates to a different level when a folder 1002 is selected compared to when a video 902 is selected. For example, a second set of selection items is displayed in response to detecting selection of one of the folders. The second set of selection items includes a list of selectable videos associated with the selected folder. The list of videos 1102 is illustrated in FIG. 11. In this example, the list of videos 1102 is arranged in alphabetical order by video title.

In addition to the list of videos, the navigational toolbar 904 is displayed. In the level illustrated in FIG. 11, the navigational toolbar 904 includes a back navigation item 1104 to navigate back to the previously displayed level. The back navigation item 1104 includes an identification 1106 of the arrangement that the electronic device 100 navigates back to in response to selection of the back navigation item 1104.

Each of the videos is selectable by touching or tapping on the area of the touch-sensitive display 118 that is associated with the video. In response to detecting selection of one of the videos, information associated with the selected video is displayed in a video playing level. An example of the video playing level is illustrated in FIG. 12. In this example, the information associated with the selected video may include the video, the video title 1202, and other information such as the time of play of video, time remaining, and/or any other suitable information.

In addition to the information, selectable video player controls are displayed on the touch-sensitive display 118. The video player controls include, for example, a rewind control 1204 to go to the beginning of the video, a pause control 1206 to pause playing, and a forward control 1208 to skip to the end of the video.

The navigational toolbar 904 is also displayed along with the information associated with the video. The navigational toolbar includes a back navigation item 1208 that includes an identification 1210 of the folder to which the electronic device 100 navigates back.

When selection of one of the videos 902 is detected from the information associated with the first level illustrated in FIG. 9 and FIG., 10, the electronic device 100 navigates directly to the video player level, rather than to an intermediary level. The information associated with the selected video is displayed. In this example, however, the back navigation item includes an indication of the arrangement of information, e.g., "CAPTURED" or "LIBRARY" Thus, the arrangement of information, to which the electronic device navigates in response to selection of the back navigation item, is identified.

The method applies to other applications, such as a photo viewing application, and any other suitable application with an organization of information.

Although the examples described above refer to a back navigation item that is utilized to return to a previous level, for example to the previously displayed arrangement of information, other navigation items may be included. A navigation item may be included to move to any level within the hierarchical structure of information. A navigation item may also be utilized to jump more than one level, for example, from a third level to a first level or from a first level to a third level. A navigation item or tab may also be utilized to jump to an alternative arrangement. For example, the music player application may also include navigation items or tabs to jump to an arrangement based on artist, genre, playlist, or any other suitable arrangement. The navigation items may be dependent on the context, or the information displayed and the level of the information displayed such that different navigation items are displayed for different levels or different displayed information.

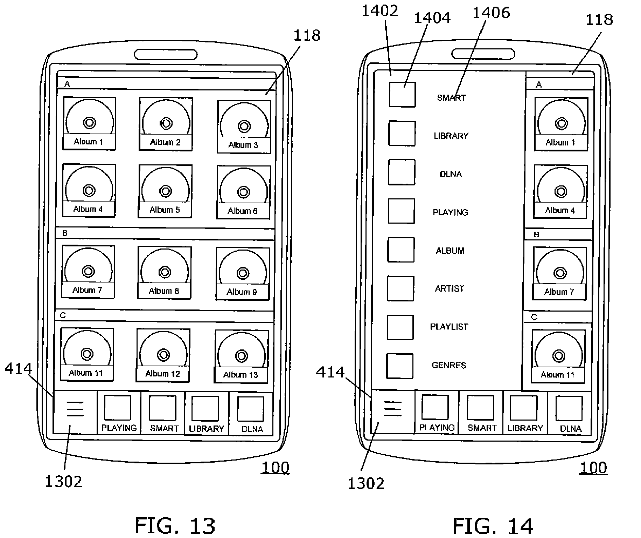

Another example of a navigational toolbar 414 and selectable items utilized to navigate through information are illustrated in FIG. 13 and FIG. 14. In this example, the navigational toolbar 414 includes an overflow navigation item 1302. The overflow navigation item may be displayed, for example, when all of the navigation items do not fit on to the navigation toolbar 414 in the available space at one time or when the navigation items are too numerous to fit on the navigational toolbar 414 before and after utilizing a "more options" item. The overflow navigation item 1302 is selected when a touch is detected at an associated area of the touch-sensitive display 118. In response to selection of the overflow navigation item 1302, an overflow navigation item list 1402 is displayed. To display the overflow navigation item list 1402 in this example, the information displayed on the touch-sensitive display 118 (prior to detecting selection of the overflow navigation item 1302) shifts, slides, or scrolls to the right and the overflow navigation item list 1402 shifts, slides, or scrolls onto the screen from the left. Alternatively, the overflow navigation item list 1402 may slide in from the left, the top, the bottom, and/or may be overlaid on the displayed information. Optionally, the navigational toolbar 414 may remain unchanged. The overflow navigation item list 1402 may slide back off the screen in response to detecting a second selection of the navigation item 1302. Optionally, the overflow navigation item list 1402 may be statically displayed or revealed as the prior displayed information shifts, slides, or scrolls of the screen.

In this example, the overflow navigation item list 1402 includes selectable navigation items that include a list of icons or images 1404 and a corresponding list of titles or labels 1406 identifying the navigation items. The overflow navigation item list 1402 includes navigation items corresponding to the tabs displayed in the navigational toolbar 414 when information associated with the first level is displayed. The overflow navigation item list 1402 also includes additional navigation items that are not included in the tabs or other items in the navigational toolbar 414. The overflow navigation item list 1402 may also include navigational items associated with other levels and may be utilized to quickly navigate between different levels or organization of information. For example, the overflow navigation item list 1402 may be utilized to navigate directly down one or more levels, to navigate directly up one or more levels, to navigate directly to any arrangement of information associated with the first level, regardless of the level from which the overflow navigation item list 1402 is displayed. Thus, the overflow navigation item list 1402 facilitates direct navigation to any other level or arrangement of information.

Navigation through information associated with different levels of an application is facilitated by the navigational toolbar. Tabs are utilized in one level to navigate through different arrangements of information associated with that level. A back navigation item is utilized in other levels to facilitate navigation back to information associated with the previous level. The back navigation item may include an identifier of the level or arrangement to which the device navigates in response to detecting a touch on the back navigation item. Shortcuts may also be utilized to navigate between different levels or different arrangements of information. Navigation with the navigation toolbar facilitates quickly moving through information without requiring sequentially navigating back and forth through an organization of information by providing options to jump or skip through previous movements through the organization and go directly to a specific organization or location in the information.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
displaying, on a touch-sensitive display of an electronic device, a first set of selection items in a navigational tool bar and a first arrangement of information associated with a first level of an application;
in response to detection of an input to display information associated with a second level of the application when the electronic device is in the first level, displaying a second set of selection items in the navigational tool bar and information associated with the second level, wherein the second set of selection items includes a first back navigation item;
in response to detecting selection of the first back navigation item, navigating from the second level of the application to the first level of the application.

2. The method according to claim 1, wherein the first set of selection items includes a tab and, in response to detecting selection of the tab, displaying a second arrangement of information associated with the first level.

3. The method according to claim 2, wherein the first back navigation item comprises an identification of one of the first arrangement of information and the second arrangement of information.

4. The method according to claim 1, wherein the first set of selection items includes a plurality of tabs and, in response to detecting selection of one of the tabs, displaying an alternative arrangement of information associated with the first level.

5. The method according to claim 1, wherein the first set of selection items includes a more options item and, in response to detecting selection of the more options item, displaying further selection items in the navigational toolbar.

6. The method according to claim 1, wherein the second set of selection items includes a more options item and, in response to detecting selection of the more options item, displaying further selection items in the navigational toolbar.

7. The method according to claim 1, comprising, in response to detection of an input to display information associated with a third level of an application when the electronic device is in the second level, displaying a third set of selection items in the navigational tool bar and the information associated with the third level, wherein the third set of selection items includes a second back navigation item.

8. The method according to claim 7, comprising, in response to detecting selection of the second back navigation item, navigating from the third level of the application to the second level of the application.

9. The method according to claim 1, wherein the navigational toolbar includes a selectable overflow navigation item, and wherein the method comprises, in response to detecting selection of the selectable overflow navigation item, displaying a list of selectable navigation items.

10. The method according to claim 1, wherein the information associated with the second level comprises further information associated with a subset of the information associated with the first level.

11. The method according to claim 1, wherein the information associated with the first level comprises a plurality of selectable features.

12. The method according to claim 1, wherein detection of the input to display information associated with the second level comprises detection of selection of one of a plurality of selectable features of the information associated with the first level.

13. The method according to claim 12, wherein the first back navigation item comprises an identification of the first arrangement of information.

14. A computer-readable medium having computer-readable code executable by at least one processor of a portable electronic device to perform the method according to any one of claims 1 to 13.

15. An electronic device comprising:
a touch-sensitive display;
at least one processor coupled to the touch-sensitive display and configured to display, on the touch-sensitive display, a first set of selection items in a navigational tool bar and a first arrangement of information associated with a first level of an application, in response to detection of an input to display information associated with a second level of the application when the electronic device is in the first level, display a second set of selection items in the navigational tool bar and information associated with the second level, wherein the second set of selection items includes a first back navigation item, and in response to detecting selection of the first back navigation item, navigate from the second level of the application to the first level of the application.
